# EUROPEAN PATENT APPLICATION

(11) **EP 4 485 662 A1**
(43) Date of publication of application: **01.01.2025**
(21) Application number: 22926518.6
(22) Date of filing: 21.02.2022
(51) Int. Cl.: H01M 50/403, H01M 50/409, H01M 50/44

(54) **NANO SLURRY AND PREPARATION METHOD THEREFOR, BATTERY SEPARATOR AND MANUFACTURING METHOD THEREFOR, AND BATTERY**

(71) Applicant: Shenzhen Senior Technology Material Co., Ltd., Shenzhen, Guangdong 518106 (CN); Senior Material (Europe) AB, 633 62 Eskilstuna (SE)
(72) Inventor: WANG, Yanjie, Shenzhen, Guangdong 518106 (CN); CHEN, Zelin, Shenzhen, Guangdong 518106 (CN); SHEN, Jianqiang, hangzhou, Jiangsu 213100 (CN); LIN, Lujing, Shenzhen, Guangdong 518106 (CN); HUANG, Huizhen, Shenzhen, Guangdong 518106 (CN)
(74) Representative: Gill Jennings & Every LLP
(86) International application number: PCT/CN2022/077088
(87) International publication number: WO 2023/155191

(57) **Abstract**

The present invention provides a nano slurry and a preparation method thereof, a battery separator and a manufacturing method thereof, and a battery. The nano slurry includes a dispersant, a ceramic material, a one-dimensional nanomaterial, a linear hydrophilic polymer and an adhesive, where a mass ratio of the one-dimensional nanomaterial to the ceramic material is in a range of 0.01% to 20%, and a particle diameter of the ceramic material are in a range of 5 nm to 500 nm.

## Description

### TECHNICAL FIELD

The present invention relates to the field of batteries, in particular, to a nano slurry and a preparation method thereof, a battery separator and a manufacturing method thereof, and a battery.

### BACKGROUND

A separator for lithium battery is one of core components in lithium-ion batteries, and its performance has a very important impact on the overall performance of lithium batteries and is one of the key technologies restricting the development of lithium batteries. With continuous expansion of the application fields of lithium batteries and the deepening of the impact of lithium battery products in people's lives, people's requirements for the performance of lithium batteries are getting higher and higher. In order to meet development requirements of lithium batteries, the separator, as an important component in lithium batteries, should not only have good chemical stability and lower manufacturing costs, but also be capable of improving the safety performance of lithium-ion batteries, which is an important trend in the current development of lithium batteries.

In the existing related art, a separator for a lithium battery may include a base film and a coating layer coated on at least one surface of the base film, and a slurry of the coating layer may be prepared from ceramic particles. However, the surface energy of the ceramic particles may easily cause the problem of agglomeration of the ceramic particles, resulting in poor surface uniformity of the coating layer and thus affecting the fitting of electrode pieces in subsequent battery assembly.

### SUMMARY

The present invention provides a nano slurry and a preparation method thereof, a battery separator and a manufacturing method thereof, and a battery, so as to solve the problem of agglomeration of caused by the surface energy of ceramic particles.

According to a first aspect of the present invention, there is provided a nano slurry for a coating layer on a surface of a separator, including a dispersion medium, a ceramic material, a one-dimensional nanomaterial, a linear hydrophilic polymer and an adhesive, where a mass ratio of the one-dimensional nanomaterial to the ceramic material is in a range of 0.01% to 20%, a content of water in the dispersion medium is 90wt% or more, and a particle diameter of the ceramic material is in a range of 5 nm to 500 nm.

Optionally, the linear hydrophilic polymer is adhered to the one-dimensional nanomaterial and connected with the ceramic material.

Optionally, a mass ratio of the linear hydrophilic polymer to water in the dispersion medium is in a range of 0.01% to 0.1%.

Optionally, a molecular weight of the linear hydrophilic polymer is in a range of 1000 g/mol to 10000 g/mol.

Optionally, the linear hydrophilic polymer includes an amine-group hydrophilic polymer.

Optionally, the amine-group hydrophilic polymer includes at least one of the following:
polyacrylamide and polyethyleneimine.

Optionally, a diameter of the one-dimensional nanomaterial is in a range of 1 nm and 50 nm, and a length of the one-dimensional nanomaterial is in a range of 100 nm to 1000 nm.

Optionally, a mass ratio of the adhesive to the ceramic material is in a range of 1% to 10%.

Optionally, the adhesive includes at least one of the following:
polyvinyl alcohol, lithium polyacrylate, sodium carboxymethylcellulose and styrene-butadiene rubber.

According to a second aspect of the present invention, there is provided a preparation method of a nano slurry, which is used to prepare the nano slurry according to the first aspect and in optional solutions thereof, and includes:
dispersing a ceramic material in a dispersion medium to obtain a ceramic dispersion, where a content of water in the dispersion medium is 90wt% or more;
dispersing a one-dimensional nanomaterial in the ceramic dispersion to obtain a specified dispersion;
adding a linear hydrophilic polymer into the specified dispersion to obtain a specified solution; and
adding an adhesive into the specified solution to obtain the nano slurry.

Optionally, after adding the linear hydrophilic polymer into the specified dispersion, the method further includes:
by homogenization at a specified pressure and/or stirring at a specified speed, dispersing the specified dispersion into which the linear hydrophilic polymer has been added and adhering the linear hydrophilic polymer to the one-dimensional nanomaterial.

According to a third aspect of the present invention, there is provided a battery separator, including a base film and a coating layer,
where the coating layer is formed by coating a specified nano slurry on at least one surface of the base film; and
the specified nano slurry is the nano slurry according to the first aspect and in optional solutions thereof or the nano slurry prepared by the preparation method according to the second aspect.

According to a fourth aspect the present invention, there is provided a battery separator, including a base film and a coating layer, where the coating layer includes a ceramic material, a one-dimensional nanomaterial and a linear hydrophilic polymer, where a mass ratio of the one-dimensional nanomaterial to the ceramic material is in a range of 0.01% to 20%, a particle diameter of the ceramic material is in a range of 5 nm to 500 nm, and the linear hydrophilic polymer wraps the one-dimensional nanomaterial and is connected with the ceramic material.

According to a fifth aspect the present invention, there is provided a battery, including the battery separator according to the third or fourth aspect the present invention.

In the nano slurry and the preparation method thereof, the battery separator and the manufacturing method thereof, and the battery, as provided by the present invention, a one-dimensional nanomaterial is introduced into the ceramic material, so that surface energy of the ceramic material is reduced and then a surface roughness of the formed coating layer may be reduced; and meanwhile,
in order to further reduce the surface roughness, a linear hydrophilic polymer is also used, so that the linear hydrophilic polymer plays a bridging role between the one-dimensional nanomaterial and the ceramic material, and then make the two completely combined, further fully reducing a tendency of agglomeration of the ceramic material and further reducing the surface roughness of the formed coating layer. Moreover, the introduction of the linear hydrophilic polymer may also help to avoid the settlement of the slurry and improve the stability of the slurry.

In addition, based on the research on the state of the slurry, it may be found that a selection of mass of the one-dimensional nanomaterial has a certain correlation with a state of the final slurry (such as viscosity), and then the present invention creatively discovers and utilizes this discovery, and selects a mass ratio of the one-dimensional nanomaterial to the ceramic material to be in a range of 0.01% to 20%, thereby effectively ensuring that the slurry can be conveniently coated.

### BRIEF DESCRIPTION OF DRAWINGS

To describe the technical solutions in embodiments of the present invention or in the prior art more clearly, the following briefly introduces the accompanying drawings needed for describing the embodiments or the prior art. Apparently, the accompanying drawings in the following description are merely some embodiments of the present invention, and persons of ordinary skill in the art may still derive other drawings based on these accompanying drawings without creative effort.
FIG. 1 is a flow chart of a preparation method of a nano slurry in an embodiment of the present invention.
FIG. 2 is a flow chart of a manufacturing method of a battery separator in an embodiment of the present invention.

### DETAILED DESCRIPTION

The following clearly and comprehensively describes the technical solutions in embodiments of the present invention with reference to the accompanying drawings in the embodiments of the present invention. Apparently, the described embodiments are merely some rather than all of embodiments of the present invention. All other embodiments obtained by persons of ordinary skill in the art based on the embodiments of the present invention without creative effort shall fall within the protection scope of the present invention.

In the description of the specification of the present invention, it is to be understood that the orientations or positional relationships indicated by the terms "upper part", "lower part", "upper end", "lower end", "lower surface" and "upper surface" are based on the orientations or positional relationships shown in the drawings, which is only for the convenience of describing the present invention and simplifying the description, but not indicate or imply that the indicated devices or elements must have a specific orientation, be constructed and operated in a specific orientation, and thus, they cannot be understood as a limitation of the present invention.

In the description of the specification of the present invention, terms "first" and "second" are only used for descriptive purposes, and cannot be understood as indicating or implying relative importance or implicitly indicating the number of indicated technical features. Therefore, features defined by "first" and "second" may explicitly or implicitly include one or more such features.

In the description of the present invention, "a plurality of" means more tha one, for example, two, three, four, etc., unless otherwise specifically defined.

In the description of the specification of the present invention, unless otherwise specified and limited, terms such as "connect" should be broadly understood, for example, it may be fixed connection, detachable connection, or integrated connection; mechanical connection, electrical connection, or communicable connection with each other; or direct connection, indirect connection through an intermediate medium, internal communication of two elements or interaction between two elements. For persons of ordinary skill in the art, the specific meanings of the above terms in the present invention may be understood according to specific situations.

The technical solutions of the present invention will be described in detail with specific embodiments. The following specific embodiments may be combined with each other, and the same or similar concepts or processes may not be repeated in some embodiments.

The embodiments of the present invention provides a nano slurry for a coating layer on a surface of a separator, including a dispersion medium, a ceramic material, a one-dimensional nanomaterial, a linear hydrophilic polymer and an adhesive.

The dispersion medium may be any liquid that may be used for material dispersion, and a content of water in the dispersion medium is 90wt% or more, and in addition, the dispersion medium may further include ethanol, acetone, N-methylpyrrolidone or other dispersion medium.

That is, the content of water may be 90wt%, 92wt%, 93wt%, 95wt%, 98wt%, 99wt% or 100wt%.

In some solutions, when the content of water in the dispersion medium is not 100wt%, it means that other solvent is introduced into the dispersion medium besides water, and further, because other solvent is introduced into water, a surface tension of the mixed solvent may be greatly reduced, and the reduction of the surface tension is beneficial to further enhancing the dispersion uniformity of the ceramic material, the one-dimensional nanomaterial and the linear hydrophilic polymer, so that the linear hydrophilic polymer may be more fully connected and contacted with the ceramic material and the one-dimensional nanomaterial, and thus the problem of agglomeration of the ceramic particle is better solved.

The ceramic material includes, for example, at least one of the following: alumina, silicon oxide, titanium oxide, magnesium hydroxide, boehmite, etc., where a particle diameter of the ceramic material (for example, alumina) is in a range of 5 nm to 500 nm, in which the ceramic material has very large surface energy, so it is very easy to be agglomerated, resulting in unstable slurry. The embodiments of the present invention introduce the one-dimensional nanomaterial and the linear hydrophilic polymer precisely for the agglomeration that occurs under this condition, reducing a tendency of agglomeration. In contrast, in relevant art, since the ceramic material used is usually larger than 600 nm, a technical problem of agglomeration usually does not occur, and thus, both finding and solving the problem of agglomeration are one of improvements of the embodiments of the present invention.

The one-dimensional nanomaterial may also be understood as nanowire, nanotube or nanorod, and may include, for example, at least one of the following: nanocellulose, carbon nanotube, aramid nanofiber and polyimide nanofiber.

It may be seen that the one-dimensional nanomaterial is introduced into the ceramic material, which reduces the surface energy of the material and thus may reduce a surface roughness of a formed coating layer.

A mass ratio of the one-dimensional nanomaterial to the ceramic material is in a range of 0.01% to 20%. For example, the mass ratio may be 0.01%, 0.05%, 0.1%, 0.5%, 1%, 2%, 3%, 4%, 5%, 6%, 7%, 8%, 9%, 10%, 11%, 12%, 13%, 14%, 15%, 16%, 17%, 18%, 19% or 20%. With the change of the selected material, in combination with experiments, corresponding values may be selected and changed. In one example, a mass ratio of the one-dimensional nanomaterial to the ceramic material is in a range of 12% to 20%.

Furthermore, the one-dimensional nanomaterial account for 1% to 20% of the ceramic material.

Based on the research of the slurry state, it may be found that selection of mass of the one-dimensional nanomaterial has a certain correlation with a final state of the slurry (for example, viscosity) (the correlation will be explained later in combination with Table 1), and then, the present invention creatively discovers and utilizes this discovery, and selects the mass ratio of the one-dimensional nanomaterial to the ceramic material to be in the range of 0.01% to 20%, effectively ensuring that the slurry can be conveniently coated.

A diameter of the one-dimensional nanomaterial is in a range of 1 nm to 50 nm, and a length of the one-dimensional nanomaterial is in a range of 100 nm to 1000 nm.

The linear hydrophilic polymer plays a bridging role between the one-dimensional nanomaterial and the ceramic material, and then enables the two to be completely combined, further fully reducing the tendency of agglomeration of the ceramic material and further reducing the surface roughness of the formed coating layer. Moreover, the introduction of the linear hydrophilic polymer may also help to avoid the settlement of the slurry and improve the stability of the slurry. Comparison of specific performances will be described later in combination with Table 1.

In a further example, a mass ratio of the linear hydrophilic polymer to water in the dispersion medium is in a range of 0.01% to 0.1%, for example, it may be 0.01%, 0.02%, 0.03%, 0.04%, 0.05%, 0.06%, 0.07%, 0.08%, 0.09% or 0.1%.

A molecular weight of the linear hydrophilic polymer is in a range of 1000 g/mol to 10000 g/mol, for example, it may be 1000 g/mol, 2000 g/mol, 3000 g/mol, 4000 g/mol, 5000 g/mol, 6000 g/mol, 7000 g/mol, 8000 g/mol, 9000 g/mol or 10000 g/mol.

The linear hydrophilic polymer includes an amine-group hydrophilic polymer, where the amine-group hydrophilic polymer includes, for example, at least one of the following: polyacrylamide and polyethyleneimine. However, it is not limited to the examples here.

For the use of the amine-group hydrophilic polymer, the action principle thereof is as follows:

A surface of the material has a defect site, which forms a dangling bond, while an amine group (-NH-) has a lone pair of electrons, which is easy to bind with the dangling bond on the surface of the material, so the amine group has very good affinity for the material, so that the amine-group hydrophilic polymer may be firmly adsorbed on the surface of the ceramic. The other end of the amine-group hydrophilic polymer is a nonpolar carbon-based molecular chain, which has poor compatibility with polar water, so the ceramic with the amine-group hydrophilic polymer will settle directly. After the introduction of carbon-based one-dimensional nanomaterial, a carbon-containing molecular chain on the amine-group hydrophilic polymer is very easy to be in affinity with a carbon-containing molecular chain on the one-dimensional nanomaterial, and then a structure of ceramic - amine-group polymer - one-dimensional nanomaterial is formed, where the hydrophilic functional group on the one-dimensional nanomaterial form a highly stable networked structure in water, which greatly enhances the stability of this structure in water. Furthermore, the amine-group hydrophilic polymer may act as a dispersant. In one embodiment, the linear hydrophilic polymer is adhered to the one-dimensional nanomaterial.

Based on the research on the state of the slurry, it may be found that the linear hydrophilic polymer has correlation with the state of the dispersion (the correlation will be explained hereinafter in combination with Table 1), and then the present invention creatively discovers and utilizes this discovery, and selects the mass ratio of the linear hydrophilic polymer to water in the dispersion medium to be in a range of 0.01% to 0.1%, which on one hand may avoid the slurry from settlement to ensure the stability of the slurry, and on the other hand may effectively reduce the agglomeration of the ceramic material.

The adhesive may be any material that may play an adhesive role, and for example, may include at least one of the following: polyvinyl alcohol, lithium polyacrylate, sodium carboxymethylcellulose and styrene-butadiene rubber.

Further, a mass ratio of the adhesive to the ceramic material may be in a range of 1% to 10%, for example, it may be 1%, 2%, 3%, 4%, 5%, 6%, 7%, 8%, 9% or 10%.

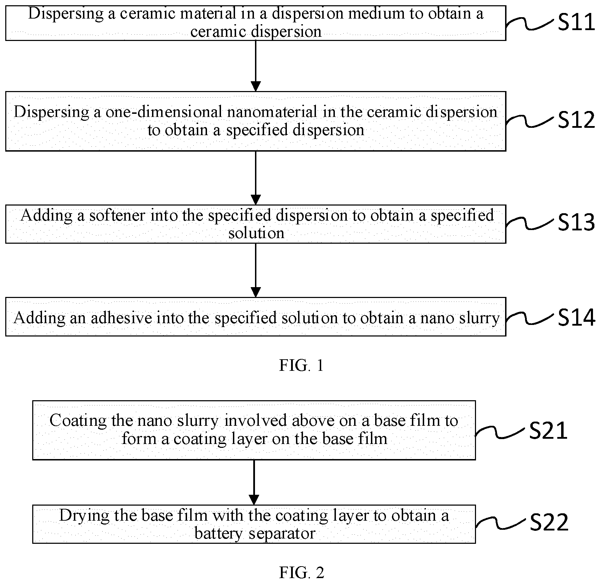

In view of this, if there is too much adhesive (for example, the mass ratio of the adhesive to the ceramic material is greater than 10%), it may block pores and affect the transmission rate of lithium ions; on the contrary, if there is too little adhesive (for example, the mass ratio of the adhesive to the ceramic material is less than 1%), the ceramic material and the one-dimensional nanomaterial are easy to fall off. Therefore, when the range of 1% to 10% is selected, the transmission rate and the bonding performance may be effectively balanced. In order to obtain the above-mentioned nano slurry, an embodiment of the present invention also provides a preparation method for the nano slurry, which is used for preparing the above-mentioned nano slurry. Please refer to FIG. 1, the preparation method includes:
S11: dispersing a ceramic material in a dispersion medium to obtain a ceramic dispersion;
S12: dispersing a one-dimensional nanomaterial in the ceramic dispersion to obtain a specified dispersion;
S13: adding a linear hydrophilic polymer into the specified dispersion to soften the specified dispersion to obtain a specified solution; and
S14: adding an adhesive into the specified solution to obtain the nano slurry.

In a specific example of step S11, the ceramic material may be fully dispersed in the dispersion medium, and a content of water in the dispersion medium is 90wt% or more. A dispersion method may be, for example, at least one of high-speed stirring, high-pressure homogenization, sanding dispersion, etc., to uniformly disperse the ceramic material in the dispersion medium to form the ceramic dispersion. In an example, a concentration of the ceramic material in the ceramic dispersion may be 0.01wt% to 50wt%.

In a specific example of step S12, the one-dimensional nanomaterial may be added into the ceramic dispersion, and then the one-dimensional nanomaterial may be dispersed again by at least one of high-speed stirring, high-pressure homogenization, sanding dispersion, etc., so that the ceramic material and the one-dimensional nanomaterial can be fully and uniformly mixed. The dispersion method in step S11 may be the same as or different from that in step S12.

In a specific example of step S13, after adding the linear hydrophilic polymer, the specified dispersion to which the linear hydrophilic polymer has been added may be dispersed by homogenization at a specified pressure (for example, 500 bar to 2000bar) and/or stirring at a specified speed (for example, 3k r/min to 50 k r/min), and the linear hydrophilic polymer is enabled to be adhered to the one-dimensional nanomaterial.

The adhesion may be based on the performance of the linear hydrophilic polymer itself, and the adhesion may be completed during dispersion.

In some examples, because of the huge surface energy, the particles of the ceramic material and the one-dimensional nanomaterial in the dispersion exist as agglomerates, and it is difficult for ordinary polymer to enter into these agglomerates. The linear hydrophilic polymer selected in the present invention has linear characteristics and little resistance to enter into the agglomerates; and on the other hand, when an amide material is selected as the linear hydrophilic polymer, amide has strong polarity characteristics and excellent compatibility in water. As such, the linear hydrophilic polymer may easily enter into the agglomerates along with water, and under the interaction of polarity, it is tightly coated on the surface of nanomaterial. With an external strong force (such as high pressure, high-speed stirring, etc.), the agglomerates are destroyed and stably dispersed in water.

In a specific example of step S14, the adhesive may be added to the specified solution obtained after step S13, and in some examples, an auxiliary agent may be added subsequently. In order to explain the function of each feature in the above specific examples, explanation will be given below in combination with data obtained from the tests.

**Table 1:**

| Serial No. | Ceramic material and its ratio to water (wt%) | One-dimensional nanomaterial and its ratio to ceramic material (wt%) | Material of linear hydrophilic polymer and its ratio to water (wt%) | Type and ratio of dispersion medium | State of slurry | Surface roughness of coated separator (nm) |
|---|---|---|---|---|---|---|
| Example 1 | Alumina 30 | Nanocellulose 15 | Polyethyleneimine 0.05 | Water 100% | Stable for more than 7 days | 250 |
| Example 2 | Alumina 30 | Nanocellulose 15 | Polyethyleneimine 0.15 | Water: N-methylpyrro | Stable for more than 3 | 400 |
| | | | | lidone-95:5 | days | |
| Example 3 | Alumina 30 | Nanocellulose 15 | Polyacrylamide 0.05 | Water 100% | Stable for more than 7 days | 262 |
| Example 4 | Magnesiu m hydroxide 20 | Carbon nanotube 10 | Polyacrylamide 0.06 | Water: acetone=98: 2 | Stable for more than 7 days | 220 |
| Example 5 | Boehmite 35 | Aramid fiber 14 | Polyethyleneimine 0.05 | Water 100% | Stable for more than 7 days | 260 |
| Example 6 | Alumina 30 | Nanocellulose 15 | Polyethyleneimine 0.05 | Water: ethanol=95: 5 | Stable for more than 7 days | 180 |
| Example 7 | Boehmite 35 | Aramid fiber 14 | Polyethyleneimine 0.05 | Water: acetone=98: 2 | Stable for more than 7 days | 203 |
| Example 8 | Alumina 30 | Nanocellulose 15 | Polyacrylamide 0.05 | Water: ethanol=93: 7 | Stable for more than 7 days | 187 |
| Comparative Example 1 | Alumina 30 | 0 | 0 | Water 100% | Slurry settled within 1 day | 2100 |
| Comparative Example 2 | Alumina 30 | Nanocellulose 0.1 | 0 | Water: ethanol=95: 5 | Slurry settled within 1 hour and could not exist stably | 1000 |
| Comparative Example 3 | Alumina 30 | Nanocellulose 15 | 0 | Water: ethanol=95: 5 | Slurry settled within 1 hour and could not exist stably | 1500 |
| Comparative Example 4 | Alumina 30 | Nanocellulose 25 | Polyethyleneimine 0.05 | Water 100% | Viscosity of slurry is too large to be coated | / |
| Comparative Example 5 | Alumina 30 | 0 | Polyethyleneimine 0.05 | Water: acetone=98: 2 | Slurry settled within 1 hour and could not exist stably | 1200 |
| Comparative Example 6 | Alumina 30 | 0 | Polyethyleneimine 0.2 | Water: ethanol=95: 5 | Slurry settled within 1 hour and could not exist stably | 2000 |
| Comparative Example 7 | Base film | / | / | / | / | 450 |

It may be seen from Comparative Example 2 and Comparative Example 3 that the slurry cannot exist stably when no linear hydrophilic polymer is added, and the surface roughness of the coated separator is above 1000 nm, which is far greater than that of the base film (450 nm), but still less than that when neither one-dimensional nanomaterial nor linear hydrophilic polymer are added (Comparative Example 1). When an addition amount of the linear hydrophilic polymer is more than 0.15%, the surface roughness of the coated separator reaches 400 nm, and Comparison Example 1 and Examples 3 to 5 show that the correlation between the addition of the linear hydrophilic polymer and roughness, and addition of an appropriate amount of the linear hydrophilic polymer may help to reduce the roughness.

From the comparison between Example 1 and Comparative Example 5, it may be seen that when no nanocellulose is added, the slurry is easy to sediment, and the surface roughness of the coated separator is as high as 1200 nm. From the comparison between Example 1 and Comparative Example 4, it may be seen that when the content of nanocellulose is too high (25%), the viscosity of the slurry is too high, resulting in coating failure. Based on this, the embodiment of the present invention configures the mass ratio of the one-dimensional nanomaterial to the ceramic material to be 0.01% to 20%.

When in a suitable range, other one-dimensional nanomaterial and linear hydrophilic polymer also have similar functions, that is, reducing surface roughness (Example 3, Example 4 and Example 5).

The main reason for the above roughness problem is that when the sizes of the ceramic material are small (the particle diameter is 5 nm to 500 nm), the surface energy of the ceramic material is very large, so it is very easy to agglomerate, which causes the instability of the slurry and the sharp increase of roughness of the surface of the coated separator. In order to reduce the surface energy, a hydrophilic polymer may be added, and the affinity with water is enhanced through the combination of the hydrophilic polymer and the surface of the ceramic material, and then the surface energy can be reduced. As shown in Comparative Example 5 and Comparative Example 6, when the mass ratio of the linear hydrophilic polymer to water is 0.01% to 0.1%, the surface roughness of the separator is better than that of Comparative Example 1, but its stability is still poor and its roughness is still very large because no one-dimensional nanomaterial is added.

By comparing Example 1 with Example 6, Example 5 with Example 7, and Example 3 with Example 8, it may be seen that in a case that the content of water in the dispersion medium is not 100wt%, the surface roughness of the separator may be effectively reduced because other solvents are introduced into water. This is because the introduction of other solvents greatly reduces the surface tension of the mixed solvent (that is, the dispersion medium). After the one-dimensional nanomaterial, the ceramic material and the linear hydrophilic polymer are added, the dispersion uniformity of the ceramic material, the one-dimensional nanomaterial and the linear hydrophilic polymer may be further enhanced, thus better solving the agglomeration problem of the ceramic particles and further reducing the surface roughness of the coating layer.

In addition, in the process of realizing the above examples and comparative examples, a PE base film is selected as the base film, with a thickness of 11 µm, a pore size of 40 nm and a porosity of 42%. Further, the above technical effects reflected in the above examples and comparative examples are reflected by coating with the same (or similar) base film.

Corresponding to the nano slurry and the preparation method thereof mentioned above, the embodiment of the present invention provides a battery separator, which includes a base film and a coating layer,
the coating layer is formed by coating nano slurry on at least one surface of the base film; and
the specified nano slurry is the nano slurry for the coating layer on the surface of the separator mentioned above, or the specified nano slurry is the nano slurry prepared by the method of the nano slurry mentioned above.

In addition, the embodiment of the present invention also provides a battery separator, which includes a base film and a coating layer, the coating layer includes a ceramic material, a one-dimensional nanomaterial and a linear hydrophilic polymer, where a mass ratio of the one-dimensional nanomaterial to the ceramic material is in a range of 0.01% to 20%, a particle diameter of the ceramic material are in a range of 5 nm to 500 nm, and the linear hydrophilic polymer is adhered to the one-dimensional nanomaterial and connected with the ceramic material.

Any technical terms, technical means, technical effects and optional embodiments involved may be understood by referring to the relevant descriptions in the previous text.

Based on the above battery separator, please refer to FIG. 2, an embodiment of the present invention also provides a manufacturing method of a battery separator, which includes the following steps:
S21: coating the nano slurry involved above on the base film to form a coating layer on the base film; and
S22: drying the base film with the coating layer to obtain the battery separator.

In the specific example of step S21, the slurry may be coated on the base film by at least one of micro-concave roller coating, spray coating, dip coating, extrusion coating, etc., and then the ceramic composite battery separator may be obtained by drying. In addition, the coating layer may be single-sided or double-sided, and then the coating layer is formed on one side or both sides.

The embodiment of the present invention also provides a battery, which includes the battery separator involved in the above optional solutions.

In the description of this specification, the description of reference terms "one implementation", "one embodiment", "specific implementation process" and "one example" means that specific features, structures, materials or characteristics described in connection with this embodiment or example are included in at least one embodiment or example of the present invention. In this specification, the schematic expressions of the above terms do not necessarily refer to the same embodiment or example. Moreover, the specific features, structures, materials or characteristics described may be combined in any one or more embodiments or examples in a suitable manner.

Finally, it should be noted that the above embodiments are only used to illustrate the technical solutions of the present application, but not to limit them. Although the present invention is illustrated in detail with reference to the above embodiments, those of ordinary skill in the art should understand that they may still make modifications to the technical solutions described in the above embodiments or make equivalent substitutions to some or all of the technical features; and these modifications or substitutions do not make the essence of the corresponding technical solutions deviate from the scope of the technical solutions of the embodiments of the present application.

## Claims

1. A nano slurry for a coating layer on a surface of a separator, comprising a dispersion medium, a ceramic material, a one-dimensional nanomaterial, a linear hydrophilic polymer and an adhesive, wherein a mass ratio of the one-dimensional nanomaterial to the ceramic material is in a range of 0.01% to 20%, a content of water in the dispersion medium is 90wt% or more, and a particle diameter of the ceramic material are in a range of 5 nm to 500 nm.

2. The nano slurry according to claim 1, wherein the linear hydrophilic polymer is adhered to the one-dimensional nanomaterial and connected with the ceramic material.

3. The nano slurry according to claim 1, wherein a mass ratio of the linear hydrophilic polymer to water in the dispersion medium is in a range of 0.01% to 0.1%, and a molecular weight of the linear hydrophilic polymer is in a range of 1000 g/mol to 10000 g/mol.

4. The nano slurry according to claim 1, wherein the linear hydrophilic polymer comprises an amine-group hydrophilic polymer.

5. The nano slurry according to claim 4, wherein the amine-group hydrophilic polymer comprises at least one of the following:
polyacrylamide and polyethyleneimine.

6. The nano slurry according to claim 1, wherein a diameter of the one-dimensional nanomaterial is in a range of 1 nm and 50 nm, and a length of the one-dimensional nanomaterial is in a range of 100 nm to 1000 nm.

7. The nano slurry according to any one of claims 1 to 6, wherein a mass ratio of the adhesive to the ceramic material is in a range of 1% to 10%.

8. The nano slurry according to any one of claims 1 to 6, wherein the adhesive comprises at least one of the following:
polyvinyl alcohol, lithium polyacrylate, sodium carboxymethylcellulose and styrene-butadiene rubber.

9. A preparation method of a nano slurry, wherein the method is used to prepare the nano slurry according to any one of claims 1 to 8, and comprises:
dispersing a ceramic material in a dispersion medium to obtain a ceramic dispersion, wherein a content of water in the dispersion medium is 90wt% or more;
dispersing a one-dimensional nanomaterial in the ceramic dispersion to obtain a specified dispersion;
adding a linear hydrophilic polymer into the specified dispersion to obtain a specified solution; and
adding an adhesive into the specified solution to obtain the nano slurry.

10. The preparation method according to claim 9, wherein after adding the linear hydrophilic polymer into the specified dispersion, the method further comprises:
dispersing the specified dispersion into which the linear hydrophilic polymer has been added and adhering the linear hydrophilic polymer to the one-dimensional nanomaterial through homogenization at a specified pressure and/or stirring at a specified speed.

11. A battery separator, comprising a base film and a coating layer,
the coating layer is formed by coating a specified nano slurry on at least one surface of the base film; and
the specified nano slurry is the nano slurry according to any one of claims 1 to 8 or the nano slurry prepared by the method according to claim 9.

12. A battery separator, comprising a base film and a coating layer, wherein the coating layer comprises a ceramic material, a one-dimensional nanomaterial and a linear hydrophilic polymer, a mass ratio of the one-dimensional nanomaterial to the ceramic material is in a range of 0.01% to 20%, a particle diameter of the ceramic material is in a range of 5 nm to 500 nm, and the linear hydrophilic polymer is adhered to the one-dimensional nanomaterial and connected with the ceramic material.

13. A battery, comprising the battery separator according to claim 11 or 12.
